# FASCICULE DE BREVET EUROPEEN

(11) **EP 2 572 069 B1**
(45) Date de publication et mention de la délivrance du brevet: **04.09.2019**
(21) Numéro de dépôt: 11719577.6
(22) Date de dépôt: 17.05.2011
(51) Int. Cl.: E06B 3/66, E06B 3/663

(54) **ESPACEUR POUR PANNEAU DE VITRAGE SOUS VIDE, PANNEAU DE VITRAGE SOUS VIDE ET PROCÉDÉ DE FABRICATION CORRESPONDANTS**
DISTANZSTÜCK FÜR EINE VAKUUMGLASPLATTE SOWIE ENTSPRECHENDE VAKUUMGLASPLATTE UND HERSTELLUNGSVERFAHREN
SPACER FOR A VACUUM GLAZING PANEL, AND CORRESPONDING VACUUM GLAZING PANEL AND PRODUCTION METHOD

(30) Priorité: 18.05.2010 BE 201000297
(43) Date de publication de la demande: 27.03.2013
(73) Titulaire: AGC Glass Europe, 1348 Louvain-la-Neuve (BE)
(72) Inventeur: CALIARO, Sébastien, B-6040 Jumet (BE); CLOSSET, François, B-6040 Jumet (BE); SCHEYVAERTS, Florence, B-6040 Jumet (BE)
(74) Mandataire: Chabou, Samia
(86) Numéro de dépôt international: PCT/EP2011/057918
(87) Numéro de publication internationale: WO 2011/144588

(56) Documents cités:
- EP-A1- 1 018 493
- EP-A1- 1 506 945
- EP-A2- 1 195 496
- FR-A1- 2 701 474
- US-A- 2 909 814

## Description

### 1. Domaine de l'invention

Le domaine de l'invention est celui des vitrages multiples isolants et plus particulièrement des vitrages sous vide. L'invention concerne plus particulièrement des espaceurs pour panneau de vitrage sous vide.

### 2. Solutions de l'art antérieur

Un panneau de vitrage sous vide est typiquement composé d'au moins deux feuilles de verre séparées par un espace dans lequel a été réalisé un vide. Un tel vitrage est classiquement utilisé pour ses propriétés d'isolation thermique élevée. L'épaisseur de l'espace sous vide est typiquement de 80 µm à 800 µm. Afin d'atteindre de hautes performances d'isolation, la pression à l'intérieur du vitrage doit être de l'ordre de 10-3 mbar. Afin d'obtenir une telle pression à l'intérieur du vitrage, un joint d'étanchéité est placé à la périphérie des deux feuilles de verre et le vide est créé à l'intérieur du vitrage grâce à une pompe. Pour éviter que le vitrage ne s'effondre sous la pression atmosphérique (due à la différence de pression entre l'intérieur et l'extérieur du vitrage), des espaceurs sont placés de manière régulière (par exemple sous la forme d'une matrice) entre les deux panneaux de verre.

Les espaceurs ont généralement une forme cylindrique ou sphérique, on parle de piliers. Aujourd'hui, ces espaceurs sont généralement métalliques et créent donc des fuites thermiques dans le panneau de vitrage. Afin de maintenir un coefficient de transmission thermique U inférieur à 0,6W/m²K, la surface totale des espaceurs en contact avec le verre doit représenter moins de 1% de la surface du panneau de vitrage sous vide.

Par ailleurs, les espaceurs doivent présenter une résistance à la compression suffisante afin qu'ils ne se déforment pas lors de la mise sous vide du panneau de vitrage isolant et donc afin que la distance entre les deux feuilles de verre et la zone de contact entre l'espaceur et les feuilles de verre soient maintenues constantes. La résistance à la compression requise dépend du pourcentage de la surface du verre occupé par les espaceurs (par exemple la résistance à la compression doit être au moins égal à 11 MPa dans le cas ou les espaceurs couvrent 1% de la surface du vitrage). La résistance à la compression des métaux est définie dans la norme ASTM E9-09 (« Standard test methods of compression testing of metallic materials at room temperature »).

EP831073B1 décrit une gamme d'espaceurs constitués d'un matériau en acier inoxydable ayant une résistance à la compression d'au moins 491 MPa et ayant la forme de colonnes cylindriques d'environ 0,5 mm de diamètre et d'environ 0,2 mm (+ / -0.01 mm) de hauteur. Ces espaceurs sont espacées d'environ 25 à 40 mm près des bords du vitrage et par environ 20 mm ailleurs.

EP1195496A2 divulgue un espaceur selon le préambule de la revendication 1.

Au cours du processus de fabrication du vitrage sous vide, les espaceurs doivent être placés et maintenus en position verticale jusqu'à ce que le vitrage soit à l'état comprimé (lorsque le vide est créé dans le vitrage). Le tableau d'espacement est maintenu dans la bonne position, grâce seulement à la force de compression induite par la pression atmosphérique.

Toutefois, il a été observé que les espaceurs de forme sphérique ou cylindrique ont tendance à se déplacer lors de la fabrication du panneau de vitrage sous vide et notamment lors de la mise sous vide.

En conséquence, il a été proposé de mettre en oeuvre des espaceurs en Ni₂₀CR₈₀ en forme de C qui présentent une meilleure stabilité et ont moins tendance à se déplacer lors de la fabrication du panneau de vitrage. Ce matériau présente une résistance à la compression d'environ 700 MPa. Cette résistance permet donc de l'utiliser dans un vitrage sous vide tel que décrit plus haut.

Cependant, le choix d'un matériau avec une forte résistance à la compression rend plus difficile la mise en forme d'espaceurs de petites tailles. Plus particulièrement la fabrication d'un fil de diamètre inférieur à 200 µm sera généralement plus difficile que pour un acier moins résistant.

En outre, les matériaux à forte résistance à la compression, tels que l'inconel 718 ou le Ni₈₀CR₂₀ sont plus couteux que les aciers avec une base Fer (et ce essentiellement en raison de leur haute teneur en Nickel).

### 3. Objectifs de l'invention

L'invention a notamment pour objectif de pallier ces inconvénients de l'art antérieur.

Plus précisément, un objectif de l'invention est de fournir un espaceur pour panneau de vitrage sous vide qui présente une résistance à la compression plus élevée que les espaceurs classiques.

Un autre objectif de l'invention est de fournir un tel espaceur qui permette d'obtenir des panneaux de vitrage sous vide avec de bonne performances en terme de coefficient de transmission thermique et en terme d'esthétique.

Un autre objectif de l'invention, dans au moins un de ses modes de réalisation, est de fournir un tel espaceur qui rende plus aisée la fabrication du vitrage sous vide.

Un autre objectif de l'invention, dans au moins un de ses modes de réalisation, est de fournir un tel espaceur qui présente une meilleure stabilité et qui a moins tendance à se déplacer lors de la fabrication du panneau de vitrage sous vide.

Un autre objectif de l'invention, dans au moins un de ses modes de réalisation, est de fournir un tel espaceur qui soit aisé à mettre en forme.

L'invention, dans au moins un de ses modes de réalisation, a encore pour objectif de fournir un tel espaceur qui soit peu coûteux.

### 4. Exposé de l'invention

L'invention concerne un espaceur destiné à être pris en sandwich entre des première et seconde feuilles de verre d'un panneau de vitrage sous vide de manière à maintenir, entre ces feuilles de verre, un premier espace formant une première cavité dans laquelle règne un vide inférieur à 1 mbar, un joint d'étanchéité placé à la périphérie des feuilles de verre refermant la première cavité.

Selon l'invention, un tel espaceur comprend un acier inoxydable austénitique écroui, l'écrouissage dudit acier résultant en une augmentation de la résistance à la compression dudit acier lors de la fabrication de l'espaceur supérieure à 50% de sa résistance à la compression initiale.

Les aciers inoxydables austénitiques sont des alliages Fe-Cr-Ni comprenant plus de 50% en poids de Fer, plus de 11% en poids de Chrome (par exemple entre 16% et 19% en poids) et moins de 20% en poids de Nickel (par exemple entre 6% et 9.5% en poids).

Le principe général de l'invention repose sur la mise en oeuvre d'un acier austénitique pour réaliser un espaceur de panneau de vitrage sous vide. En effet, la microstructure initiale des aciers inoxydables austénitiques, qui contiennent donc de l'austénite résiduelle, leur confère une bonne déformabilité. Ainsi, un tel espaceur est relativement malléable tant qu'il n'est pas écroui, ce qui facilite la mise en forme de cet espaceur puis, une fois écroui, il devient très résistant à la compression.

En effet, lors de l'application d'un traitement visant à obtenir l'écrouissage de l'acier inoxydable austénitique, cet acier inoxydable austénitique s'écroui fortement et peut ainsi atteindre une résistance à la compression très élevée. Préférentiellement, la résistance de cet acier inoxydable austénitique est encore renforcée grâce à la transformation de l'austénite instable en martensite, plus dure, sous l'effet du traitement. L'importance de cette transformation et du durcissement qu'elle induit est fonction de la stabilité de la phase austénitique et donc de la composition. Moins la phase austénitique est stable, plus cet effet de durcissement a tendance à être marqué. Le Nickel ayant tendance à stabiliser cette phase austénitique, cette propriété est plus marquée pour les composées à basse teneur en Nickel (Ni inférieur à 20% en poids). L'augmentation de la résistance du matériau (par écrouissage et éventuellement transformation de phase) peut être contrôlée lors de la fabrication de l'espaceur (type de procédé de fabrication, température, vitesse de déformation, ...) afin de fournir à l'espaceur la résistance à la compression requise pour un vitrage sous vide dans une configuration donnée.

La résistance d'un acier inoxydable austénitique peut facilement doubler grâce au traitement conduisant à l'écrouissage. Par exemple, dans le cas d'une mise en forme, par exemple par tréfilage pour obtenir un espaceur de section cylindrique (mise en forme conduisant donc à l'écrouissage de l'acier : ainsi l'écrouissage a lieu lors de la mise en forme), une réduction de section du fil de 80% induit une augmentation de la résistance de l'acier inoxydable AISI 301 (pour « American Iron and Steel Institute 301 ») jusqu'à plus de 1400 MPa (sa résistance initiale étant d'environ 620 MPa).

Ainsi, avec un tel acier inoxydable austénitique, on obtient un espaceur présentant une résistance à la compression plus élevées que les espaceurs classiques. Ainsi, pour une même valeur de pression dans le panneau de vitrage sous vide, on peut réduire considérablement la surface des espaceurs en contact avec les deux panneaux du vitrage sous vide, et donc réduire les dimensions des espaceurs et donc réduire leur surface en contact avec le verre ou diminuer leur densité dans le panneau de vitrage par rapport aux espaceurs classiques. Ainsi, on obtient de meilleures performances en termes de coefficient de transmission thermique et en termes d'esthétique qu'avec les espaceurs classiques.

Par ailleurs, non écrouis, les aciers inoxydables austénitiques étant relativement malléables comparé aux matériaux classiquement choisi pour les espaceurs (pour leurs propriétés de haute résistance à la compression), la mise en forme des espaceurs selon l'invention est réalisée de manière plus aisée, ce qui rend la fabrication du vitrage sous vide dans sa globalité plus facile et moins coûteuse.

En outre, les aciers inoxydables austénitiques essentiellement à base de Fer sont moins coûteux que les aciers à forte résistance à la compression, qu'ils tels que l'inconel 718 ou le Ni₈₀CR₂₀ (qui sont plus couteux essentiellement à cause de leur haute teneur en Nickel).

Avantageusement, ledit acier austénitique est l'un des aciers inoxydables suivants :
- AISI 301 (pour « American Iron and Steel Institute 301 ») ;
- AISI 302 (pour « American Iron and Steel Institute 302 »).

Préférentiellement, l'espaceur comprend une portion d'un fil de section cylindrique obtenu par tréfilage dudit acier austénitique.

Ainsi, dans ce mode de mise en oeuvre de l'invention, l'écrouissage (nécessaire à l'obtention d'une haute résistance à la compression) de l'acier austénitique de l'espaceur a lieu pendant la fabrication de l'espaceur et plus précisément pendant une étape de mise en forme de l'espaceur. Préférentiellement, la mise en forme est une mise en forme à une température à froid ou à tiède (températures de fabrication permettant de ne pas arriver à une recristallisation complète de l'alliage, dans le cas contraire il perdrait ses propriétés acquises lors de la mise en forme à froid). Cette température peut donc être adaptée pour chaque type de procédé de fabrication et chaque type d'alliage. Par exemple, pour les aciers AISI 301 et 302, la norme EN10270_3 indique que la température maximale d'utilisation pour ne pas recristalliser complètement l'alliage est de 250°C.

Préférentiellement, le fil présente un diamètre compris entre 50 µm et 300 µm et préférentiellement compris entre 100 µm et 200 µm.

Avantageusement, la longueur de ladite portion de fil est comprise entre 0,5 mm et 5 mm.

Préférentiellement, ladite portion de fil est courbée sur au moins une de ses portions de sorte à former une portion de boucle dont le rayon de courbure maximum est compris entre 0,1 mm et 1 mm.

Ainsi, un tel espaceur présente une meilleure stabilité et a moins tendance à se déplacer lors de la fabrication du panneau de vitrage sous vide que les espaceurs cylindriques ou sphériques. Ainsi, on facilite la manipulation et le positionnement de l'espaceur dans le panneau de vitrage sous vide.

Préférentiellement, la portion de fil est une portion de cercle dont le rayon de courbure est compris entre 0,1 mm et 1 mm.

L'invention concerne également un panneau de vitrage sous vide comprenant au moins des première et seconde feuilles de verre séparées par un premier espace formant une première cavité dans laquelle règne un vide inférieur à 1 mbar, un joint d'étanchéité placé à la périphérie des feuilles de verre refermant la première cavité, le panneau comprenant en outre une pluralité d'espaceurs tels que précédemment décrits, les espaceurs étant pris en sandwich entre les première et seconde feuilles de verre de manière à maintenir ledit premier espace.

Avantageusement, les espaceurs sont disposés entre la première et la seconde feuille de verre de sorte à former une matrice dont le pas est compris entre 20 et 80 mm et préférentiellement compris entre 30 et 60 mm.

Préférentiellement, le panneau de vitrage sous vide comprend en outre une couche d'isolation thermique disposée sur une surface interne d'au moins une des feuilles de verre.

Préférentiellement, le panneau de vitrage sous vide comprend en outre une troisième feuille de verre séparée de l'une des première et seconde feuille de verre par un second espace formant une seconde cavité et un second un joint d'étanchéité placé à la périphérie des troisième et de l'une des première et seconde feuilles de verre afin de maintenir le second espace, ladite seconde cavité étant remplie d'au moins un gaz.

Bien entendu, selon l'invention, la seconde cavité peut également être mise sous vide.

L'invention concerne également un procédé de fabrication d'un espaceur tel que précédemment décrit destiné à être pris en sandwich entre des première et seconde feuilles de verre d'un panneau de vitrage sous vide de manière à maintenir, entre ces feuilles de verre, un premier espace formant une première cavité dans laquelle règne un vide inférieur à 1 mbar, un joint d'étanchéité placé à la périphérie des feuilles de verre refermant la première cavité,

le procédé comprenant les étapes suivantes :
- obtention d'un acier inoxydable austénitique ;
- mise en forme de l'acier inoxydable austénitique pour former ledit espaceur ;
- écrouissage dudit acier austénitique.

Préférentiellement, ladite étape de mise en forme de l'acier inoxydable austénitique comprend les étapes suivantes :
- obtention d'un fil de section cylindrique par tréfilage dudit acier inoxydable austénitique ;
- découpe d'au moins une portion du fil pour former ledit espaceur,
   et ladite étape d'écrouissage est confondue avec l'étape de mise en forme.

Ainsi, le procédé de fabrication de l'espaceur selon l'invention plus aisé et plus économique du fait qu'il n'est pas nécessaire de mettre en oeuvre un écrouissage distinct de la mise en forme.

Bien entendu, conformément à l'invention, l'écrouissage de l'acier inoxydable austénitique peut être obtenu en dehors de toute mise en forme au moyen d'une étape de traitement spécifique, par exemple par application d'une pression importante à l'acier. Dans ce cas, le procédé de fabrication de l'espaceur peut ne pas comprendre d'étape de mise en forme. S'il y a quand même mise en forme, celle-ci peut avoir lieu avant ou après le traitement d'écrouissage.

Avantageusement, ladite étape de mise en forme de l'acier inoxydable austénitique comprend en outre une étape de courbure de la portion de fil sur au moins une de ses portions de sorte à former une portion de boucle dont le rayon de courbure maximum est compris entre 0.1 mm et 1 mm.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- les figures 1 et 2 présentent un schéma d'un panneau de vitrage sous vide selon un mode de réalisation de l'invention ;
- la figure 3 illustre un procédé de fabrication d'un espaceur selon un mode de réalisation de l'invention.

### 6. Description d'un mode de réalisation de l'invention

La présente invention va être décrite en faisant référence à des modes de réalisation particuliers et en faisant référence à certains dessins mais l'invention n'est pas limitée par cela et n'est limitée que par les revendications. Dans les dessins, la taille et les dimensions relatives de certains éléments peuvent être exagérés et ne pas être dessinés à l'échelle pour des raisons d'illustration.

De plus les termes premier, second, troisième et similaire dans la description et dans les revendications sont utilisés pour distinguer entre des éléments similaires et non pas nécessairement pour décrire une séquence qu'elle soit temporelle, spatiale, à des fins de classement ou autre. Il est bien entendu que les termes ainsi utilisés sont interchangeables dans des circonstances appropriées et que les modes de réalisations de l'invention décrits ici sont capables d'opérer dans d'autres séquences que celles décrites ou illustrées ici.

De plus, les termes haut, bas, au-dessus, en-dessous et similaire dans la description et les revendications sont utilisés pour des raisons de description et non pas nécessairement pour décrire des positions relatives. Il est bien entendu que les termes ainsi utilisés sont interchangeables dans des circonstances appropriées et que les modes de réalisation de l'invention décrits ici sont capables d'être opéré dans d'autres orientations que celles décrites ou illustrées ici.

Il est à remarquer que le terme "comprenant", utilisé dans les revendications, ne doit pas être interprété comme étant restreint aux moyens listés après celui-ci; il n'exclue pas d'autres éléments ou étapes. Il doit donc être interprété comme spécifiant la présence des éléments spécifiés, entiers, étapes ou composants référés, mais n'exclue pas la présence ou l'addition d'un élément, entier, étape ou composant, ou groupe de ceux-ci. Donc l'étendue de l'expression "un appareil comprenant les moyens A et B" ne doit pas être limité à des appareils consistant seulement des composants A et B. Cela veut dire qu'en ce qui concerne la présente invention, les seuls composants relevants de l'appareil sont A et B.

Tel qu'utilisé ici et à moins d'indications contraires, par « étanchéité », il est entendu l'étanchéité à tout gaz qui pourrait être utilisé dans un double vitrage pour amélioré l'isolation (par exemple l'argon) ou l'étanchéité à l'air ou tout autre gaz présent dans l'atmosphère (dans le cas d'un vitrage sous vide).

Tel qu'utilisé ici et à moins d'indications contraires, par « couche d'isolation thermique » il est entendu une couche d'oxyde métallique ayant une émissivité inférieure à 0,2, préférentiellement inférieure à 0,1 et plus préférentiellement inférieure à 0,05. Une couche d'isolation thermique peut être par exemple l'une des couches suivantes : Planibel G, Planibel top N et Pop N+ commercialisées par la société AGC.

Tel qu'utilisé ici et à moins d'indications contraires le terme « espaceur » se rapporte à un ou plusieurs éléments assurant une distance relativement constante entre deux panneaux de verre adjacent.

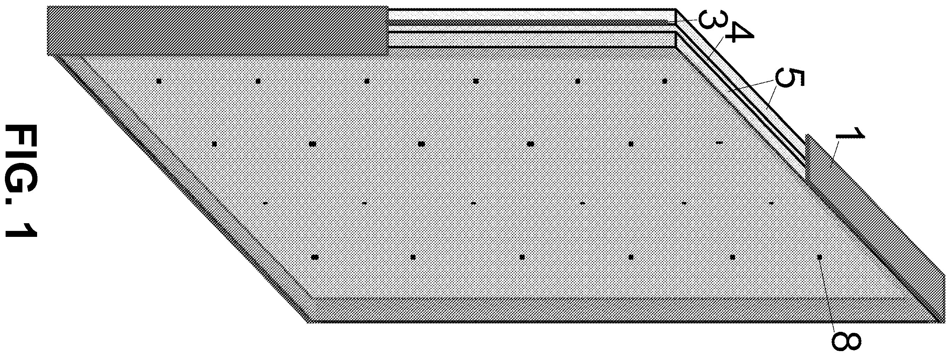

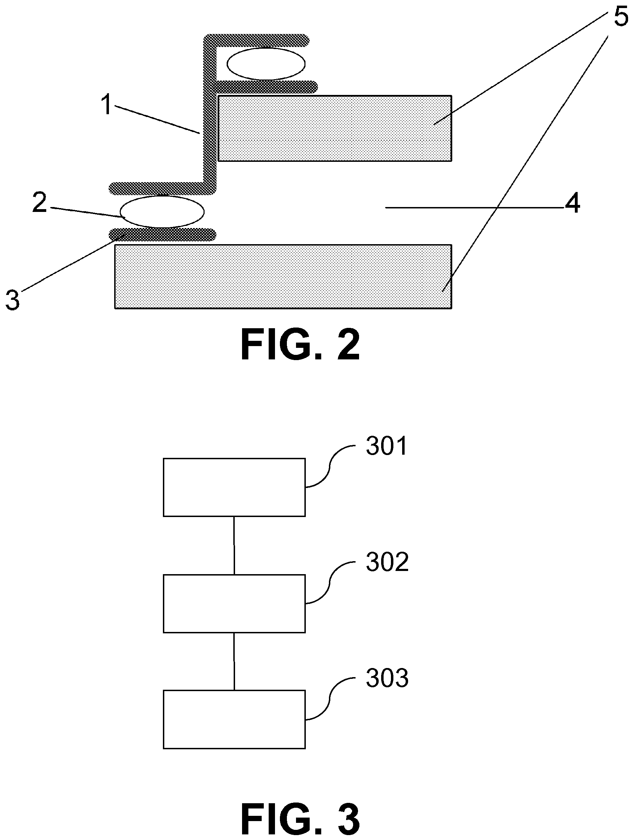

On présente, en relation avec les ***figures 1*** ***et*** ***2******,*** un panneau de vitrage sous vide selon un mode de réalisation de l'invention.

Le panneau de vitrage sous vide comprend des première et seconde feuilles de verre 5 (par exemple des feuilles de verre clair sodo-silico-calcique d'épaisseur 6 mm) séparées par un premier espace formant une première cavité 4 dans laquelle règne un vide inférieur à 1 mbar, par exemple égal à 10⁻³ mbar (obtenu par pompage dans la cavité grâce à une pompe à vide).

Bien entendu, tout autre type de verre, et d'épaisseur de verre peuvent être mis en oeuvre.

Les deux feuilles de verre 5 sont assemblées de manière étanche au gaz (assurant le vide) via un joint d'étanchéité placé à la périphérie des feuilles de verre 5 refermant la première cavité 4.

Par exemple, le joint d'étanchéité comprend :
▪ des couches d'adhésion 3 recouvrant une zone périphérique de chacune des première et seconde feuilles de verre 5,
▪ un feuillard métallique 1 soudé aux couches d'adhésion 3 par des soudures 2 (par exemple réalisées à l'aide d'une brasure d'étain).

Par exemple le matériau d'adhésion constituant les couches d'adhésion 3 peut être sélectionné dans le groupe composé du cuivre et de ses alliages (par exemple avec du titane et/ou du chrome), de l'aluminium et de ses alliages, du fer et de ses alliages (tel que les acier austénitiques Fe-Ni : e.g. Fer (50-55% en poids, par exemple 52% en poids), Nickel (45-50% en poids, par exemple 48% en poids) tel que l'alliage 48), les alliages de fer comprenant les métaux suivant : Fer (53-55% en poids, par exemple 53.5% en poids), Nickel (28-30% en poids, par exemple 29% en poids) et Cobalt (16-18% en poids, par exemple 17% en poids), et le Kovar®), du platine et de ses alliages, du nickel et de ses alliages, de l'or et de ses alliages, de l'argent et de ses alliages, de l'arséniure de gallium et de l'étain ou de ses alliages. Cette liste n'étant pas exhaustive.

Bien entendu, le joint d'étanchéité peut être réalisé de toute autre manière, par exemple grâce à deux feuillards métalliques soudés aux feuilles de verre et également soudés entre eux ou même grâce à de la soudure de verre.

Le panneau de vitrage sous vide comprend également une pluralité d'espaceurs 8 selon l'invention, les espaceurs étant pris en sandwich entre les première et seconde feuilles de verre 5 de manière à maintenir le premier espace entre ces feuilles de verre 5.

Par exemple, les espaceurs sont disposés entre les première et seconde feuille de verre de sorte à former une matrice dont le pas est compris entre 20 et 80 mm et préférentiellement compris entre 30 et 60 mm.

Afin d'améliorer encore les performances en terme d'isolation thermique, une couche d'isolation thermique peut être disposée sur une surface interne d'au moins une des feuilles de verre 5.

Bien entendu, selon des variantes non illustrée du mode de réalisation précité, le panneau de vitrage peut comprendre en outre une troisième feuille de verre séparée de l'une quelconque des première et seconde feuilles de verre (par exemple de la seconde feuille de verre) par un second espace afin de former une seconde cavité.

Selon une première variante, un second un joint d'étanchéité est en outre placé à la périphérie des troisième et seconde feuilles de verre afin de maintenir le second espace (par exemple de 16mm d'épaisseur), ladite seconde cavité étant remplie d'au moins un gaz. Le gaz peut être par exemple, de l'air, de l'argon, de l'azote, du krypton, du xénon, du SF6, du CO₂, ou tout autre gaz isolant thermique.

Selon une seconde variante, les troisième et seconde feuilles de verre sont assemblées de manière étanche au gaz (assurant le vide) via un joint d'étanchéité placé à la périphérie des feuilles de verre refermant la seconde cavité et une pluralité d'espaceurs selon l'invention sont pris en sandwich entre les troisième et seconde feuilles de verre de manière à maintenir le second espace entre ces feuilles de verre. On obtient ainsi un triple vitrage sous vide.

Bien entendu, d'autres variantes sont envisageables notamment en remplaçant une feuille de verre par un panneau de verre feuilleté ou par tout autre ajout ou modification.

On présente, en relation avec la ***figure 3***, un procédé de fabrication d'un espaceur selon un mode de réalisation de l'invention.

Le procédé de fabrication comprend les étapes suivantes :
▪ une étape 301 d'obtention d'un acier inoxydable austénitique ;
▪ une étape 302 de mise en forme de l'acier inoxydable austénitique pour former ledit espaceur ;
▪ une étape 303 d'écrouissage dudit acier inoxydable austénitique.

L'espaceur peut avoir des formes différentes telles que cylindrique, sphérique, filaire en forme de sablier, en forme de croix, ...

On se place dans la suite dans le cadre d'un exemple conforme à l'invention selon lequel l'espaceur est réalisé en acier AISI301 et présente une forme de C.

L'étape 302 de mise en forme de l'acier austénitique comprend tout d'abord une étape d'obtention d'un fil de section cylindrique par tréfilage. Bien entendu, l'étape d'obtention du fil peut également être obtenue par extrusion à chaud dudit acier AISI301 puis tréfilage permettant d'atteindre le diamètre final du fil.

Par exemple, en partant d'un fil de 5mm de diamètre sur lequel on réalise le tréfilage, on obtient un fil affiné présentant un diamètre de 1mm (ce qui représente une réduction de la section du fil de 80%).

L'étape 302 de mise en forme de l'acier austénitique comprend ensuite une étape de découpe (par exemple au moyen d'une pince coupante) d'au moins une portion du fil pour former ledit espaceur. Par exemple, la longueur de ladite portion de fil est de 4 mm.

Selon un mode de mise en oeuvre avantageux, l'étape 302 de mise en forme de l'acier austénitique comprend ensuite une étape de courbure de ladite portion de fil sur au moins une de ses portions de sorte à former une portion de boucle dont le rayon de courbure maximum est de 0,5 mm.

Bien entendu, l'étape de courbure peut s'effectuer avant l'étape de découpe.

Préférentiellement, la portion de fil est une portion de cercle dont le rayon de courbure est de 0,5 mm.

Ainsi, dans le cadre de ce second exemple, l'étape d'écrouissage 303 est confondue avec l'étape de tréfilage.

Ainsi, lors de l'opération de tréfilage, une réduction de section du fil de 80% induit une augmentation de la résistance de l'acier inoxydable AISI 301 de 620MPa à environ 1400 MPa.

Par exemple, si on utilise des espaceurs en AISI 301 non écrouis (qui présentent donc une résistance à la compression de 620 MPa) qui ont une surface de contact équivalente à un disque de 250 µm de rayon, un espacement de 30 mm entre ceux-ci, on obtient un panneau de vitrage sous vide présentant une valeur de coefficient U égale à 0,8 W/(m²K).

Par contre, en utilisant les espaceurs selon l'invention ci-dessus mentionnés (en AISI 301 écroui et mis en forme de C) qui présentent une résistance à la compression de 1400MPa, on peut diminuer le nombre d'espaceurs en les éloignant de 50 mm tout en améliorant la valeur U est devient environ 0,5 W/(m²K).

Les valeurs U des vitrages sous vide sont estimées sur base d'un vitrage décrit précédemment, incluant une couche type basse émissivité. Les transmissions thermiques (valeurs U) ont été évaluées en utilisant la méthode décrite dans la publication de l'Université de Sydney : DETERMINATION OF THE OVERALL HEAT TRANSMISSION COEFFICIENT (U-VALUE) OF VACUUM GLAZING, TM.Simko, AH.Elmahdy and RE.Collins. ASHRAE Transactions, 105, pt 2, p. 1-9. 1999.

Bien entendu, l'invention n'est pas limitée aux exemples de réalisation mentionnés ci-dessus, mais uniquement par les revendications.

## Revendications

1. Espaceur (8) destiné à être pris en sandwich entre des première et seconde feuilles de verre (5) d'un panneau de vitrage sous vide de manière à maintenir, entre ces feuilles de verre, un premier espace formant une première cavité (4) dans laquelle règne un vide inférieur à 1 mbar, un joint d'étanchéité (1) placé à la périphérie des feuilles de verre refermant la première cavité, ledit espaceur (8) comprend un acier inoxydable austénitique écroui,
**caractérisé en ce que** l'écrouissage résulte en une augmentation de la résistance à la compression dudit acier lors de la fabrication de l'espaceur supérieure à 50% de sa résistance à la compression initiale.

2. Espaceur selon la revendication 1, **caractérisé en ce que** ledit acier austénitique est l'un des aciers inoxydables austénitiques suivants :
• AISI 301 ;
• AISI 302.

3. Espaceur selon l'une quelconque des revendications précédentes, **caractérisée en ce qu'**il comprend une portion d'un fil de section cylindrique obtenu par tréfilage dudit acier inoxydable austénitique.

4. Espaceur selon la revendication précédente, **caractérisé en ce que** le fil présente un diamètre compris entre 50 µm et 300 µm et préférentiellement compris entre 100 µm et 200 µm.

5. Espaceur selon l'une quelconque des revendications 3 et 4, **caractérisé en ce que** la longueur de ladite portion de fil est comprise entre 0,5 mm et 5 mm.

6. Espaceur selon l'une quelconque des revendications 3 à 5, **caractérisé en ce que** ladite portion de fil est courbée sur au moins une de ses portions de sorte à former une portion de boucle dont le rayon de courbure maximum est compris entre 0,1 mm et 1 mm.

7. Espaceur selon la revendication précédente, **caractérisée en ce que** la portion de fil est une portion de cercle dont le rayon de courbure est compris entre 0,1 mm et 1 mm,

8. Panneau de vitrage sous vide comprenant au moins des première et seconde feuilles de verre (5) séparées par un premier espace formant une première cavité (4) dans laquelle règne un vide inférieur à 1 mbar, un joint d'étanchéité (1) placé à la périphérie des feuilles de verre refermant la première cavité,
**caractérisé en ce qu'**il comprend en outre une pluralité d'espaceurs (8) selon l'une quelconque des revendications précédentes, les espaceurs étant pris en sandwich entre les première et seconde feuilles de verre de manière à maintenir ledit premier espace.

9. Panneau de vitrage sous vide selon la revendication précédente, **caractérisé en ce que** les espaceurs sont disposés entre les première et seconde feuille de verre de sorte à former une matrice dont le pas est compris entre 20 mm et 80 mm et préférentiellement compris entre 30 et 60 mm.

10. Panneau de vitrage sous vide selon l'une quelconque des revendications précédentes, **caractérisé en ce qu'**il comprend en outre une couche d'isolation thermique disposée sur une surface interne d'au moins une des feuilles de verre.

11. Panneau de vitrage selon l'une quelconque des revendications précédentes, **caractérisé en ce qu'**il comprend en outre une troisième feuille de verre séparée de l'une des première et seconde feuille de verre par un second espace formant une seconde cavité et un second un joint d'étanchéité placé à la périphérie des troisième et de l'une des première et seconde feuilles de verre afin de maintenir le second espace, ladite seconde cavité étant remplie d'au moins un gaz.

12. Procédé de fabrication d'un espaceur (8) selon l'une des revendications 1 à 7 destiné à être pris en sandwich entre des première et seconde feuilles de verre (5) d'un panneau de vitrage sous vide de manière à maintenir, entre ces feuilles de verre, un premier espace formant une première cavité (4) dans laquelle règne un vide inférieur à 1 mbar, un joint d'étanchéité (1) placé à la périphérie des feuilles de verre refermant la première cavité,
**caractérisé en ce qu'**il comprend les étapes suivantes :
- obtention d'un acier inoxydable austénitique ;
- mise en forme de l'acier inoxydable austénitique pour former ledit espaceur ;
- écrouissage dudit acier inoxydable austénitique résultant en une augmentation de la résistance à la compression dudit acier lors de la fabrication de l'espaceur supérieure à 50% de sa résistance à la compression initiale.

13. Procédé de fabrication selon la revendication précédente, **caractérisé en ce que** ladite étape de mise en forme de l'acier inoxydable austénitique comprend les étapes suivantes :
- obtention d'un fil de section cylindrique par tréfilage dudit acier austénitique ;
- découpe d'au moins une portion du fil pour former ledit espaceur, et **en ce que** ladite étape d'écrouissage est confondue avec l'étape d'extrusion à chaud.

14. Procédé de fabrication selon la revendication précédente, **caractérisé en ce que** ladite étape de mise en forme de l'acier inoxydable austénitique comprend en outre une étape de courbure de la portion de fil sur au moins une de ses portions de sorte à former une portion de boucle dont le rayon de courbure maximum est compris entre 0,1 mm et 1 mm.

## Patentansprüche

1. Abstandhalter (8), der dazu bestimmt ist, sandwichartig zwischen ersten und zweiten Glasscheiben (5) einer Vakuumverglasung aufgenommen zu werden, um zwischen diesen Glasscheiben einen ersten Raum aufrechtzuerhalten, der einen ersten Hohlraum (4) bildet, in dem ein Vakuum von weniger als 1 mbar herrscht, wobei eine am Umfang der Glasscheiben angeordnete Dichtung (1) den ersten Hohlraum umschließt, wobei der Abstandhalter (8) einen kaltverfestigten austenitischen nichtrostenden Stahl umfasst,
**dadurch gekennzeichnet, dass** die Kaltverfestigung zu einer Erhöhung des Druckwiderstands des Stahls bei der Herstellung des Abstandhalters um mehr als 50 % seiner ursprünglichen Druckfestigkeit führt.

2. Abstandhalter nach Anspruch 1, **dadurch gekennzeichnet, dass** der austenitische Stahl einer der folgenden austenitischen nichtrostenden Stähle ist:
• AISI 301;
• AISI 302.

3. Abstandhalter nach einem der vorhergehenden Ansprüche, **dadurch gekennzeichnet, dass** er einen Abschnitt eines Drahts mit zylindrischem Querschnitt umfasst, der durch Drahtziehen des austenitischen nichtrostenden Stahls erhalten wird.

4. Abstandhalter nach dem vorhergehenden Anspruch, **dadurch gekennzeichnet, dass** der Draht einen Durchmesser zwischen 50 µm und 300 µm und bevorzugt zwischen 100 µm und 200 µm aufweist.

5. Abstandhalter nach einem der Ansprüche 3 und 4, **dadurch gekennzeichnet, dass** die Länge des Drahtabschnitts zwischen 0,5 mm und 5 mm beträgt.

6. Abstandhalter nach einem der Ansprüche 3 bis 5, **dadurch gekennzeichnet, dass** der Drahtabschnitt über mindestens einen seiner Abschnitte gebogen ist, so dass er einen Schlaufenabschnitt bildet, dessen grö0ter Krümmungsradius zwischen 0,1 mm und 1 mm beträgt.

7. Abstandhalter nach dem vorhergehenden Anspruch, **dadurch gekennzeichnet, dass** der Drahtabschnitt ein Kreisabschnitt ist, dessen Krümmungsradius zwischen 0,1 mm und 1 mm beträgt.

8. Vakuumverglasung, umfassend mindestens erste und zweite Glasscheiben (5), die durch einen ersten Raum getrennt sind, der einen ersten Hohlraum (4) bildet, in dem ein Vakuum von weniger als 1 mbar herrscht, wobei eine am Umfang der Glasscheiben angeordnete Dichtung (1) den ersten Hohlraum umschließt,
**dadurch gekennzeichnet, dass** sie ferner eine Vielzahl von Abstandhaltern (8) nach einem der vorhergehenden Ansprüche umfasst, wobei die Abstandhalter sandwichartig zwischen den ersten und zweiten Glasscheiben so aufgenommen, so dass sie den ersten Raum aufrechterhalten.

9. Vakuumverglasung nach dem vorhergehenden Anspruch, **dadurch gekennzeichnet, dass** die Abstandhalter zwischen den ersten und zweiten Glasscheiben so angeordnet sind, dass sie eine Matrix bilden, deren Schrittweite zwischen 20 mm und 80 mm und bevorzugt zwischen 30 und 60 mm beträgt.

10. Vakuumverglasung nach einem der vorhergehenden Ansprüche, **dadurch gekennzeichnet, dass** sie ferner eine Wärmeisolierschicht umfasst, die auf eine Innenfläche mindestens einer der Glasscheiben aufgebracht ist.

11. Verglasung nach einem der vorhergehenden Ansprüche, **dadurch gekennzeichnet, dass** sie ferner eine dritte Glasscheibe umfasst, die von der einen der ersten und zweiten Glasscheiben durch einen zweiten Raum getrennt ist, der einen zweiten Hohlraum bildet, und eine zweite Dichtung, die am Umfang der dritten und der einen der ersten und zweiten Glasscheiben angeordnet ist, um den zweiten Raum aufrechtzuerhalten, wobei der zweite Hohlraum mit mindestens einem Gas gefüllt ist.

12. Verfahren zur Herstellung eines Abstandhalters (8) nach einem der Ansprüche 1 bis 7, der dazu bestimmt ist, sandwichartig zwischen ersten und zweiten Glasscheiben (5) einer Vakuumverglasung so aufgenommen zu werden, dass er zwischen diesen Glasscheiben einen ersten Raum aufrechterhält, der einen ersten Hohlraum (4) bildet, in dem ein Vakuum von weniger als 1 mbar herrscht, wobei eine am Umfang der Glasscheiben angeordnete Dichtung (1) den ersten Hohlraum umschließt,
**dadurch gekennzeichnet, dass** es die folgenden Schritte umfasst:
- Erhalten eines austenitischen nichtrostenden Stahls;
- Formen des austenitischen nichtrostenden Stahls, um den Abstandhalter zu bilden;
- Kaltverfestigen des austenitischen nichtrostenden Stahls, das zu einer Erhöhung des Druckwiderstands des Stahls bei der Herstellung des Abstandhalters um mehr als 50 % seiner ursprünglichen Druckfestigkeit führt.

13. Herstellungsverfahren nach dem vorhergehenden Anspruch, **dadurch gekennzeichnet, dass** der Schritt des Formens des austenitischen nichtrostenden Stahls die folgenden Schritte umfasst:
- Erhalten eines Drahts mit zylindrischem Querschnitt durch Drahtziehen des austenitischen Stahls;
- Abschneiden mindestens eines Abschnitts des Drahts, um den Abstandhalter zu bilden,
und dadurch, dass der Schritt des Kaltverfestigens mit dem Schritt des Warmstrangpressens zusammenfällt.

14. Herstellungsverfahren nach dem vorhergehenden Anspruch, **dadurch gekennzeichnet, dass** der Schritt des Formens des austenitischen nichtrostenden Stahls ferner einen Schritt des Biegens des Drahtabschnitts über mindestens einen seiner Abschnitte umfasst, so dass ein Schlaufenabschnitt gebildet wird, dessen maximaler Krümmungsradius zwischen 0,1 mm und 1 mm beträgt.

## Claims

1. Spacer (8) intended to be sandwiched between first and second glass sheets (5) of a vacuum glazing panel so as to maintain, between these glass sheets, a first space forming a first cavity (4) in which a vacuum of less than 1 mbar reigns, a tightness seal (1) placed at the periphery of the glass sheets enclosing the first cavity, said spacer (8) comprises a work-hardened austenitic stainless steel,
**characterized in that** the work hardening results in an increase of the compressive strength of said steel during the manufacture of the spacer of greater that 50% of its initial compressive strength.

2. Spacer according to Claim 1, **characterized in that** said austenitic steel is one of the following austenitic stainless steels:
• AISI 301;
• AISI 302.

3. Spacer according to either one of the preceding claims, **characterized in that** it comprises a portion of a wire of cylindrical cross section obtained by wire drawing of said austenitic stainless steel.

4. Spacer according to the preceding claim, **characterized in that** the wire has a diameter of between 50 µm and 300 µm and preferentially between 100 µm and 200 µm.

5. Spacer according to either one of Claims 3 and 4, **characterized in that** the length of said portion of wire is between 0.5 mm and 5 mm.

6. Spacer according to any one of Claims 3 to 5, **characterized in that** said portion of wire is curved over at least one of its portions so as to form a loop portion, the maximum radius of curvature of which is between 0.1 mm and 1 mm.

7. Spacer according to the preceding claim, **characterized in that** the portion of wire is a circle portion, the radius of curvature of which is between 0.1 mm and 1 mm.

8. Vacuum glazing panel comprising at least first and second glass sheets (5) separated by a first space forming a first cavity (4) in which a vacuum of less than 1 mbar reigns, a tightness seal (1) placed at the periphery of the glass sheets enclosing the first cavity, **characterized in that** it further comprises a plurality of spacers (8) according to any one of the preceding claims, the spacers being sandwiched between the first and second glass sheets so as to maintain said first space.

9. Vacuum glazing panel according to the preceding claim, **characterized in that** the spacers are positioned between the first and second glass sheets so as to form a matrix, the spacing of which is between 20 mm and 80 mm and preferentially between 30 and 60 mm.

10. Vacuum glazing panel according to any one of the preceding claims, **characterized in that** it further comprises a layer of thermal insulation positioned on an inner surface of at least one of the glass sheets.

11. Glazing panel according to any one of the preceding claims, **characterized in that** it further comprises a third glass sheet separated from one of the first and second glass sheets by a second space forming a second cavity and a second tightness seal placed at the periphery of the third glass sheet and of one of the first and second glass sheets in order to maintain the second space, said second cavity being filled with at least one gas.

12. Process for manufacturing a spacer (8) according to one of Claims 1 to 7 intended to be sandwiched between first and second glass sheets (5) of a vacuum glazing panel so as to maintain, between these glass sheets, a first space forming a first cavity (4) in which a vacuum of less than 1 mbar reigns, a tightness seal (1) placed at the periphery of the glass sheets enclosing the first cavity,
**characterized in that** it comprises the following steps:
- obtaining an austenitic stainless steel;
- shaping the austenitic stainless steel in order to form said spacer;
- work hardening of said austenitic stainless steel resulting in an increase of the compressive strength of said steel during the manufacture of the spacer of greater than 50% of its initial compressive strength.

13. Manufacturing process according to the preceding claim, **characterized in that** said step of shaping the austenitic stainless steel comprises the following steps:
- obtaining a wire of cylindrical cross section by wire drawing of said austenitic steel;
- cutting at least one portion of the wire in order to form said spacer,
and **in that** said work-hardening step is combined with the hot extrusion step.

14. Manufacturing process according to the preceding claim, **characterized in that** said step of shaping the austenitic stainless steel further comprises a step of curvature of the portion of wire over at least one of its portions so as to form a loop portion, the maximum radius of curvature of which is between 0.1 mm and 1 mm.
